# EUROPÄISCHE PATENTSCHRIFT

(11) **EP 3 543 572 B1**
(45) Veröffentlichungstag und Bekanntmachung des Hinweises auf die Patenterteilung: **30.12.2020**
(21) Anmeldenummer: 19162827.0
(22) Anmeldetag: 14.03.2019
(51) Int. Cl.: F16K 31/385, F16K 21/10, F16K 21/12, F16K 31/08, E03C 1/042

(54) **FLUIDSTEUERVENTIL MIT ZEITVERZÖGERT SELBSTRÜCKSTELLENDER SCHALTFUNKTION**
FLUID CONTROL VALVE WITH DELAYED RESET SWITCHING FUNCTION
SOUPAPE DE COMMANDE DE FLUIDE À FONCTION DE COMMUTATION À RETOUR AUTOMATIQUE DÉCALÉE DANS LE TEMPS

(30) Priorität: 19.03.2018 DE 102018204147
(43) Veröffentlichungstag der Anmeldung: 25.09.2019
(73) Patentinhaber: Hansgrohe SE, 77761 Schiltach (DE)
(72) Erfinder: Groß, Jürgen, 77796 Mühlenbach (DE); Hahn, Arno, 77761 Schiltach (DE); Meier, Fridolin, 77709 Oberwolfach (DE); Werner, Bernd, 78727 Oberndorf-Beffendorf (DE)
(74) Vertreter: Patentanwälte Ruff, Wilhelm, Beier, Dauster & Partner mbB

(56) Entgegenhaltungen:
- EP-A1- 2 998 623
- CN-U- 203 297 709
- DE-A1- 3 835 497
- DE-A1-102007 011 199
- DE-A1-102012 221 043
- DE-A1-102014 113 386
- DE-A1-102017 005 959
- DE-C1- 4 322 289
- FR-A1- 2 713 735
- KR-A- 20110 048 620

## Beschreibung

Die Erfindung bezieht sich auf ein Fluidsteuerventil mit zeitverzögert selbstrückstellender Schaltfunktion nach dem Oberbegriff des Anspruchs 1.

Dieses Fluidsteuerventil beinhaltet eine Ventilkörpereinheit, die zwischen einer ersten Endlage, die einer selbsthaltenden Ausgangsstellung des Fluidsteuerventils entspricht, und einer zweiten Endlage beweglich ist, die einer temporären Schaltstellung des Fluidsteuerventils entspricht, aus der das Fluidsteuerventil zeitverzögert selbsttätig in die Ausgangsstellung zurückkehrt.

Weiter beinhaltet das Fluidsteuerventil eine Ventilbetätigungseinheit, die dafür eingerichtet ist, die Ventilkörpereinheit nutzerinitiiert von der ersten Endlage in die zweite Endlage und zeitverzögert selbsttätig von der zweiten Endlage in die erste Endlage zu bewegen. Die Ventilbetätigungseinheit umfasst ein auf die Ventilkörpereinheit wirkendes Betätigungsglied und eine Selbstrückstelleinheit.

Die Selbstrückstelleinheit weist eine Rückstellfederanordnung und eine Hydraulikdämpfereinheit auf. Die Hydraulikdämpfereinheit beinhaltet einen z.B. an einem Gehäusekörper des Fluidsteuerventils beweglich angeordneten Hydraulikzylinder mit einem Kolbenraum und einen im Kolbenraum beweglich zwischen einer stationären Kolbenendlage und einer instationären Kolbenendlage angeordneten Verdrängerkolben, mit dem das Betätigungsglied gekoppelt ist und der den Kolbenraum in zwei Halbräume unterteilt. Durch entsprechendes Bewegen des Hydraulikzylinders kann der Verdrängerkolben von seiner stationären in seine instationäre Endlage bewegt werden. Weiter umfasst die Hydraulikdämpfereinheit eine Hydraulikfluid-Durchlassverbindung zwischen den beiden Halbräumen, die bei Bewegung des Verdrängerkolbens in Richtung seiner instationären Endlage öffnet, d.h. ihren freien Durchflussquerschnitt vergrößert, vorzugsweise bis zu einem Maximalwert, und bei Bewegung des Verdrängerkolbens in Richtung seiner stationären Endlage schließt, d.h. ihren freien Durchflussquerschnitt verringert, vorzugsweise bis auf null, und eine Hydraulikfluid-Drosselverbindung zwischen den beiden Halbräumen, die mindestens bei Bewegung des Verdrängerkolbens in Richtung seiner stationären Kolbenendlage offen ist, optional auch bei der entgegengesetzten Bewegung des Verdrängerkolbens.

Mittels der Ventilbetätigungseinheit kann ein Benutzer veranlassen, dass sich die Ventilkörpereinheit von ihrer ersten in ihre zweite Endlage bewegt, was ein Umschalten des Fluidsteuerventils von seiner selbsthaltenden Ausgangsstellung in seine temporäre Schaltstellung bewirkt. Die rückstellende Schaltbewegung des Fluidsteuerventils von seiner temporären Schaltstellung in seine selbsthaltende Ausgangsstellung wird von der Ventilbetätigungseinheit selbsttätig bewirkt, und zwar mit der gewünschten Zeitverzögerung. Zur Bereitstellung dieser Zeitverzögerung dient die Hydraulikdämpfereinheit, die hierfür geeignet aufgebaut ist, wie erwähnt, insbesondere unter Verwendung der bezüglich der beiden entgegengesetzten Bewegungsrichtungen des Verdrängerkolbens im Kolbenraum unsymmetrisch arbeitenden Fluidverbindungen zwischen den beiden Kolbenhalbräumen des Hydraulikzylinders.

Das Fluidsteuerventil kann in unterschiedlichen Typen realisiert werden, z.B. als sogenanntes Selbstschlussventil. Im Fall eines solchen Selbstschlussventils ist die selbsthaltende Ausgangsstellung eine Schließstellung, mit der das Ventil eine zugehörige Fluidführung schließt bzw. absperrt. Die temporäre Schaltstellung ist dann eine Freigabestellung, in der das Ventil die betreffende Fluidführung mindestens teilweise öffnet. In alternativen Ausführungen des Fluidsteuerventils ist die selbsthaltende Ausgangsstellung eine Freigabestellung, die eine zugehörige Fluidführung mindestens teilweise öffnet, d.h. es handelt sich in diesem Fall um ein selbsttätig öffnendes Ventil, wobei die betreffende Fluidführung temporär geschlossen werden kann. Das Fluidsteuerventil kann als reines Absperrventil, in der es eine zugewiesene Fluidführung wahlweise absperrt oder öffnet, oder als Misch- oder Umstellventil ausgeführt sein, in der es in der selbsthaltenden Ausgangsstellung bzw. der temporären Schaltstellung wenigstens zwei beteiligte Fluidführungen in unterschiedlicher Weise absperrt und öffnet, z.B. in der einen Stellung eine erste Fluidführung absperrt und eine zweite Fluidführung freigibt und in der anderen Stellung die erste Fluidführung freigibt und die zweite Fluidführung absperrt.

Ein derartiges Selbstschlussventil ist in einer Ausführung als selbstschließendes Absperrventil mit einer durch eine Hilfsventileinheit vorgesteuerten Hauptventileinheit in der Offenlegungsschrift DE 38 35 497 A1 offenbart. Die dortige Hydraulikdämpfereinheit ist als hydraulisches Schließwerk ausgeführt, bei dem der Hydraulikzylinder und der Verdrängerkolben eine translatorische Kolben/Zylinder-Einheit bilden, wobei der Verdrängerkolben axialbeweglich im Hydraulikzylinder angeordnet ist und der Hydraulikzylinder über einen vorgegebenen Axialhub hinweg axialbeweglich an einem Ventilgehäusekörper angeordnet ist. Ein Dichtungskörper des Hilfsventils ist bidirektional an die Axialbewegung des Verdrängerkolbens gekoppelt, d.h. er wird mit der axialen Vor- und Rückbewegung des Verdrängerkolbens vor- bzw. zurückbewegt, vorzugsweise mechanisch mittels einer Stößelstange als Betätigungsglied, alternativ hydraulisch.

In ähnlicher Weise offenbart die Patentschrift DE 43 22 289 C1 eine Ventilvorrichtung, die als ein Fluidsteuerventil der eingangs genannten Art ausgeführt ist und eine Selbstschlussfunktionalität mit der Möglichkeit eines nutzerinitiierten vorzeitigen Schließens durch eine bidirektionale hydraulische Kopplung einer Handhabe mit einer Ventilkörpereinheit beinhaltet. Zum Öffnen des Ventils drückt der Benutzer die Handhabe und mit dieser eine an ihr festgelegte Kolbenstange samt daran angeformtem Steuerkolben axial nach vorn, wodurch sich über die hydraulische Kopplung die Ventilkörpereinheit axial nach hinten von einem Ventilsitz abhebt. Zum vorzeitigen Schließen zieht der Benutzer die Handhabe und mit ihr die Kolbenstange samt Steuerkolben axial zurück, wodurch sich wiederum über die hydraulische Kopplung die Ventilkörpereinheit axial nach vorn bewegt und gegen den Ventilsitz zur Anlage kommt. Durch ein Volumenausgleichselement aus geschlossenem Polymerschaum kann ein variabler Volumenanteil, mit dem die Kolbenstange in die Hydraulikkopplung eingreift, kompensiert werden.

Weitere artverwandte, herkömmliche Ventilvorrichtungen sind in den Offenlegungsschriften FR 2 713 735 A1, DE 10 2017 005 959 A1, DE 10 2007 011 199 A1, DE 10 2014 113 386 A1 und EP 2 998 623 A1 sowie in der Gebrauchsmusterschrift CN 203 297 709 U offenbart.

Die Offenlegungsschrift DE 10 2012 221 043 A1 offenbart ein Sanitärventil vom Membranventiltyp mit einer Ventilkörpereinheit, die einen Membranventilkörper mit einer Vorsteuerung durch ein magnetbetätigtes Pilotventil umfasst. Ein gemeinsames Betätigungselement dient sowohl zur Bewegung eines Steuerkolbens der Pilotventileinheit mittels einer Axialbewegung des Betätigungselements als auch zur Bewegung eines verstellbaren Begrenzungsanschlags für die Bewegung des Membranventilkörpers mittels einer Drehbewegung des Betätigungselements. Zur Bewegung des Steuerkolbens dient außerdem ein Weiterschaltgetriebe, auf das die Axialbewegung des Betätigungselements wirkt.

Die Offenlegungsschrift KR 10-2011-0048620 A offenbart ein sanitäres Selbstschlussventil, bei dem die Zeitverzögerung für das selbsttätige Schließen vom Benutzer durch Betätigen einer zugehörigen Einstellmutter verstellt werden kann. Durch die Betätigung der Einstellmutter wird die Geschwindigkeit der selbsttätigen Schließbewegung einer dort zur Ventilbetätigung vorgesehenen, axialbeweglichen Betätigungseinheit, die eine Drucktaste, eine Kolbenstange, einen Permanentmagneten und einen magnetischen Kolben beinhaltet, dadurch verstellt, dass mittels Verdrehen der Einstellmutter eine Reibungskraft zwischen der Kolbenstange einerseits und diese umgebenden Keilklemmelementen andererseits verändert wird, wozu eine Keilklemmung dient, die ein mit den Keilklemmelementen zusammenwirkendes Gegenkeilelement und eine Vorspannfeder umfasst. Diese Verstellung der Geschwindigkeit für die selbsttätige Schließbewegung hat eine entsprechende Verstellung der Zeitverzögerung für die selbsttätige Schließbewegung des Ventils zur Folge.

Der Erfindung liegt als technisches Problem die Bereitstellung eines Fluidsteuerventils der eingangs genannten Art zugrunde, das gegenüber dem oben erwähnten Stand der Technik Vorteile z.B. hinsichtlich flexibler Anpassbarkeit seiner zeitverzögert selbstrückstellenden Schaltfunktion an unterschiedliche Gegebenheiten oder Bedürfnisse und/oder hinsichtlich Funktionszuverlässigkeit bietet.

Die Erfindung löst dieses Problem durch die Bereitstellung eines Fluidsteuerventils mit den Merkmalen des Anspruchs 1.

Gemäß einem ersten Erfindungsaspekt ist die Ventilkörpereinheit in ihre zweite Endlage selbstrückstellend ausgebildet, und das Betätigungsglied ist mit der Ventilkörpereinheit unidirektional in Richtung zu deren erster Endlage hin bewegungsgekoppelt. Unter Letzterem ist zu verstehen, dass die Bewegungskopplung des Betätigungsglieds mit der Ventilkörpereinheit nur in dieser Richtung zur ersten Endlage der Ventilkörpereinheit hin besteht, während in der entgegengesetzten Richtung, d.h. in Richtung der Bewegung der Ventilkörpereinheit zu deren zweiter Endlage hin, keine Bewegungskopplung von Betätigungsglied und Ventilkörpereinheit gegeben ist. Dies bedeutet, dass die Ventilkörpereinheit einer Bewegung des Betätigungsglieds in dieser Richtung aufgrund einer entsprechenden Bewegung des Verdrängerkolbens nicht zwangsweise folgen muss und dass demgemäß das Betätigungsglied z.B. auch einen größeren Bewegungshub als die Ventilkörpereinheit aufweisen kann. Da die Ventilkörpereinheit selbstrückstellend in ihre zweite Endlage gelangt, bedarf dies keiner Mitwirkung des Betätigungsglieds. Es genügt, wenn das Betätigungsglied diese selbstrückstellende Bewegung der Ventilkörpereinheit in ihre zweite Endlage freigibt.

Dies hat den Vorteil, dass der Bewegungshub für den Verdrängerkolben nicht zwangsweise gleich groß gewählt werden muss wie der Bewegungshub für die Ventilkörpereinheit, wodurch sich insbesondere die Möglichkeit bietet, den Bewegungshub für den Verdrängerkolben um einen entsprechenden Leerhub größer als für die Ventilkörpereinheit zu wählen. Dadurch kann z.B. die Zeitverzögerung für die selbstrückstellende Schaltfunktion auf einen Wert vorgegeben werden, der größer als die Zeitdauer für die Bewegung der Ventilkörpereinheit von ihrer zweiten in ihre erste Endlage ist. Außerdem kann, wenn gewünscht, für die selbstrückstellende Bewegung der Ventilkörpereinheit von ihrer ersten in ihre zweite Endlage eine andere Bewegungsgeschwindigkeit gewählt werden als für die Bewegung des Betätigungsglieds in dieser Richtung. In der umgekehrten Richtung folgt die Ventilkörpereinheit durch die dann gegebene Bewegungskopplung der Bewegung des Betätigungsglieds, so dass die Ventilkörpereinheit vom Betätigungsglied in ihre erste Endlage verbracht wird, die der selbsthaltenden Ausgangsstellung des Fluidsteuerventils entspricht.

Gemäß einem zweiten Erfindungsaspekt, der zusätzlich oder alternativ zum ersten realisierbar ist, ist für die Bewegung des Hydraulikzylinders ein verstellbarer Bewegungshub ausgebildet. Dies ermöglicht in vorteilhafter Weise eine variable Einstellung des effektiven Bewegungshubs des Verdrängerkolbens im Kolbenraum des Hydraulikzylinders und damit eine variable Einstellung der Zeitverzögerungsdauer der selbstrückstellenden Schaltfunktion des Ventils. Dazu weist das Fluidsteuerventil eine Anschlaghülse auf, die koaxial zum Hydraulikzylinder angeordnet ist und eine Anschlagfläche für den Hydraulikzylinder aufweist. Die Anschlaghülse ist verstellbar an einem Gehäusekörper des Fluidsteuerventils angebracht und kann dadurch die Verstellbarkeit des Bewegungshubs für die Bewegung des Hydraulikzylinders in funktionell und konstruktiv vorteilhafter Weise bereitstellen.

In einer Weiterbildung der Erfindung bilden der Hydraulikzylinder und der Verdrängerkolben eine translatorische Kolben/Zylinder-Einheit, wobei der Hydraulikzylinder axialbeweglich an einem Gehäusekörper des Fluidsteuerventils angeordnet ist und der Verdrängerkolben axialbeweglich im Hydraulikzylinder angeordnet ist und das Betätigungsglied translatorisch auf die Ventilkörpereinheit wirkt. Eine solche Ausführung der Hydraulikdämpfereinheit wird auch abkürzend als Lineardämpfer bezeichnet. Diese Ausführungsvariante eignet sich insbesondere für Anwendungsfälle, bei denen eine geradlinige Wirkbewegung des Betätigungsglieds auf die Ventilkörpereinheit gewünscht ist. Die Axialbeweglichkeit des Hydraulikzylinders bietet sich z.B. für eine Ausführung der Ventilbetätigungseinheit mit einer Drucktaste als Nutzerschnittstelle an. Die Drucktaste kann vom Hydraulikzylinder selbst gebildet oder mit diesem gekoppelt sein.

In einer alternativen Weiterbildung der Erfindung bilden der Hydraulikzylinder und der Verdrängerkolben eine rotatorische Kolben/Zylinder-Einheit, wobei der Hydraulikzylinder rotationsbeweglich an einem Gehäusekörper des Fluidsteuerventils angeordnet ist und der Verdrängerkolben rotationsbeweglich im Hydraulikzylinder angeordnet ist und das Betätigungsglied rotatorisch auf die Ventilkörpereinheit wirkt. Dieser Typ einer Hydraulikdämpfereinheit wird auch abkürzend als Rotationsdämpfer bezeichnet. Er bietet sich beispielsweise für Anwendungen an, bei denen die Bewegung der Ventilkörpereinheit zwischen ihren zwei Endlagen eine Drehbewegung ist. Als Nutzerschnittstelle kann die Ventilbetätigungseinheit daran angepasst z.B. einen Drehknopf umfassen, der vom drehbeweglichen Hydraulikzylinder selbst gebildet oder mit diesem gekoppelt sein kann.

In einer Weiterbildung der Erfindung besteht zwischen der Ventilkörpereinheit in ihrer zweiten Endlage und dem Betätigungsglied ein Leerhub, wenn sich der Verdrängerkolben in seiner instationären Kolbenendlage befindet. Dadurch lässt sich, wie schon vorstehend kurz erwähnt, auf Wunsch vorteilhaft die Zeitverzögerung für die selbstrückkehrende Schaltfunktion entsprechend größer wählen als die Zeitdauer, welche die Ventilkörpereinheit benötigt, um von ihrer zweiten in ihre erste Endlage zu gelangen. Genauer gesagt ist die Zeitverzögerung um diejenige Zeitdauer größer, die das Betätigungsglied für das Zurücklegen des Leerhubwegs benötigt, bis es dann gegen die Ventilkörpereinheit anliegt und letztere auf dem restlichen Bewegungsweg mitnimmt.

In einer Weiterbildung der Erfindung umfasst die Ventilkörpereinheit einen Membranventilkörper mit magnetbetätigter Pilotventilvorsteuerung, wobei ein zugehöriger Magnet von einer Magnethalterung gehalten ist, die eine Anschlagfläche für das Betätigungsglied aufweist. Auf diese Weise lässt sich das Fluidsteuerventil durch einen an sich bekannten Membranventiltyp mit magnetbetätigter Vorsteuerung in Kombination mit der vorteilhaften, speziellen, zeitverzögert selbstrückstellenden Schaltfunktion bereitstellen.

In einer Ausgestaltung der Erfindung ist die Magnethalterung durch eine Vorspannfeder in einer zur Wirkrichtung des Betätigungsglieds auf die Magnethalterung entgegengesetzten Richtung vorgespannt. Damit kann für diesen Membranventiltyp mit magnetbetätigter Pilotventilvorsteuerung in einer vorteilhaften Weise eine Selbstrückstellung der Ventilkörpereinheit in ihre zweite Endlage realisiert werden.

In einer Weiterbildung der Erfindung weist die Hydraulikfluid-Durchlassverbindung einen über den Hub des Verdrängerkolbens von seiner stationären zu seiner instationären Kolbenendlage hinweg nichtkonstanten Durchlassquerschnitt auf, wobei der Durchlassquerschnitt in einem an die stationäre Kolbenendlage angrenzenden Hubbereich größer ist als in einem an die instationäre Kolbenendlage angrenzenden Hubbereich. Diese Veränderung des Durchlassquerschnitts der Hydraulikfluid-Durchlassverbindung in Abhängigkeit vom Bewegungsweg des Verdrängerkolbens kann zwei- oder mehrstufig oder mindestens abschnittweise graduell realisiert sein. Mit der Wahl des Verlaufs des Wertes des Durchlassquerschnitts in Abhängigkeit vom Verdrängerkolbenweg lässt sich das Dämpfungsbewegungsprofil der Hydraulikdämpfereinheit in einer gewünschten Weise vorgeben, z.B. mit einer langsameren Bewegung des Verdrängerkolbens aus seiner instationären Kolbenendlage heraus und einer schnelleren Bewegung ab Unterschreiten eines vorgebbaren Abstands von seiner stationären Kolbenendlage.

In einer Weiterbildung der Erfindung ist in mindestens einem der Halbräume ein kompressibles Volumenausgleichselement angeordnet. Dieses Volumenausgleichselement dient dazu, eine etwaige Veränderung des freien Volumens auszugleichen bzw. zu kompensieren, das für ein verwendetes Hydraulikfluid im Kolbenraum, d.h. in der Summe beider Kolbenhalbraumvolumina, zur Verfügung steht. Eine solche Volumenveränderung ergibt sich beispielsweise dann, wenn das Betätigungsglied als eine Betätigungs- bzw. Kolbenstange ausgeführt ist, die sich vom Verdrängerkolben aus durch einen der beiden Kolbenhalbräume hindurch und aus dem Hydraulikzylinder hinaus erstreckt. Denn in diesem Fall ändert sich mit der Bewegung des Verdrängerkolbens die Länge des im Inneren des Hydraulikzylinders liegenden Abschnitts des Betätigungsglieds und damit auch das Volumen, das dem Hydraulikfluid im Hydraulikzylinder noch zur Verfügung steht.

Die Verwendung des Volumenausgleichselements beugt somit etwaigen Überdruckeffekten im Hydraulikzylinder vor. Es ist als Abhilfe nicht erforderlich, ein kompressibles Hydraulikfluid einzusetzen oder anderweitige Fluid- oder Druckausgleichsmaßnahmen zu ergreifen. Es versteht sich, dass unter dem vorliegenden kompressiblen Volumenausgleichselement keine Dichtungselemente zu verstehen sind, die in Hydraulikdämpfereinheiten üblicherweise verwendet werden und in einem geringen Maß kompressibel sein können, vielmehr ist darunter ein separat von etwaigen Dichtungselementen angeordnetes Element ohne Abdichtfunktion zu verstehen, das eine gegenüber üblichen Dichtungselementen vorzugsweise um ein Vielfaches höhere Kompressibilität und damit eine vorzugsweise um ein Vielfaches größere Volumenausgleichsfähigkeit besitzt.

In einer Weiterbildung der Erfindung ist das Volumenausgleichselement von einem geschlossenporigen Schwammkörper gebildet, der am Verdrängerkolben angeordnet ist. Ein solcher geschlossenporiger Schwammkörper besitzt ein hohes Volumenausgleichsvermögen. Das Anordnen des Schwammkörpers am Verdrängerkolben ist konstruktiv vergleichsweise einfach realisierbar.

In einer vorteilhaften Ausführung erstreckt sich das Betätigungsglied vom Verdrängerkolben aus in einem der beiden Zylinderhalbräume und das kompressible Volumenausgleichselement ist im anderen Halbraum angeordnet. Dadurch schränkt die Betätigungsstange den Bauraum für das Volumenausgleichselement nicht ein.

Vorteilhafte Ausführungsformen der Erfindung sind in den Zeichnungen dargestellt. Diese und weitere vorteilhafte Ausführungsformen der Erfindung werden nachfolgend näher erläutert. Hierbei zeigen:
- Fig. 1: eine Blockdiagrammdarstellung eines Fluidsteuerventils in seiner selbsthaltenden Ausgangsstellung,
- Fig. 2: die Blockdiagrammdarstellung von Fig. 1 mit dem Fluidsteuerventil in seiner temporären Schaltstellung,
- Fig. 3: eine Längsschnittansicht einer Ausführung des Fluidsteuerventils als Selbstschlussventil vom Membranventiltyp mit Pilotventilvorsteuerung in seinerselbsthaltenden Ausgangsstellung,
- Fig. 4: eine Längsschnittansicht einer in der Ausführung von Fig. 3 verwendeten Selbstrückstelleinheit mit Rückstellfederanordnung und Hydraulikdämpfereinheit,
- Fig. 5: eine Perspektivansicht eines in der Ausführung von Fig. 3 verwendeten Verdrängerkolbens,
- Fig. 6: die Ansicht von Fig. 3 in einer ersten Zwischenstellung des Fluidsteuerventils während eines Schaltvorgangs von der Ausgangsstellung in die temporäre Schaltstellung,
- Fig. 7: eine Detailansicht eines Verdrängerkolbenbereichs von Fig. 6,
- Fig. 8: die Ansicht von Fig. 7 für eine Variante hinsichtlich einer HydraulikfluidDurchlassverbindung der Hydraulikdämpfereinheit,
- Fig. 9: die Ansicht von Fig. 7 für eine weitere Variante der HydraulikfluidDurchlassverbindung,
- Fig. 10: die Ansicht von Fig. 3 für eine zweite Zwischenstellung des Fluidsteuerventils,
- Fig. 11: die Ansicht von Fig. 3 mit dem Fluidsteuerventil in seiner temporären Schaltstellung,
- Fig. 12: die Ansicht von Fig. 3 für eine Zwischenstellung des Fluidsteuerventils während seiner Rückkehr in die selbsthaltende Ausgangsstellung,
- Fig. 13: die Ansicht von Fig. 7 für die Zwischenstellung von Fig. 12,
- Fig. 14: die Ansicht von Fig. 13 für die Variante von Fig. 8,
- Fig. 15: die Ansicht von Fig. 13 für die Variante von Fig. 9,
- Fig. 16: die Ansicht von Fig. 3 für eine weitere Zwischenstellung des Fluidsteuerventils während seiner Rückkehr in die selbsthaltende Ausgangsstellung,
- Fig. 17: die Ansicht von Fig. 10 mit dem Hydraulikzylinder in einer Position mit verstelltem Bewegungshub und
- Fig. 18: die Ansicht von Fig. 11 für die verstellte Position des Hydraulikzylinders von Fig. 17.

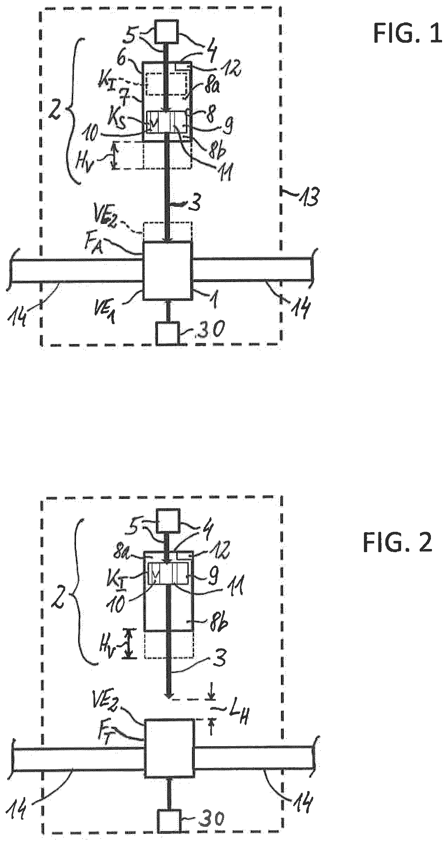

Das in den Fig. 1 und 2 blockdiagrammatisch veranschaulichte Fluidsteuerventil mit zeitverzögert selbstrückstellender Schaltfunktion umfasst eine Ventilkörpereinheit 1 und eine Ventilbetätigungseinheit 2. Die Ventilkörpereinheit 1 ist zwischen einer in Fig.1 gezeigten, ersten Endlage VE₁, die einer selbsthaltenden Ausgangsstellung F_{A} des Fluidsteuerventils entspricht, und einer in Fig. 2 gezeigten, zweiten Endlage VE₂ beweglich, die einer temporären Schaltstellung F_{T} des Fluidsteuerventils entspricht, aus der das Fluidsteuerventil zeitverzögert selbsttätig in die Ausgangsstellung F_{A} zurückkehrt. Die Ventilbetätigungseinheit 2 ist dafür eingerichtet, die Ventilkörpereinheit 1 nutzerinitiiert von der ersten Endlage VE₁ in die zweite Endlage VE₂ und zeitverzögert selbsttätig von der zweiten Endlage VE₂ in die ersten Endlage VE₁ zu bewegen. Die Ventilbetätigungseinheit 2 beinhaltet ein auf die Ventilkörpereinheit 1 wirkendes Betätigungsglied 3 und eine Selbstrückstelleinheit 4, die eine Rückstellfederanordnung 5 und eine Hydraulikdämpfereinheit 6 umfasst.

Im gezeigten Beispiel der Fig. 1 und 2 wirkt die Ventilkörpereinheit 1 auf eine Fluidführung 14, in der ein vom Ventil zu regulierender Fluidstrom geführt wird, z.B. ein Wasserstrom, wobei sie einen Durchlassquerschnitt der Fluidführung 14 ändert, wenn sie sich zwischen ihren beiden Endlagen VE₁, VE₂ bewegt. Beispielsweise gibt sie die Fluidführung 14 in der zweiten Endlage VE₂ mit größerem Durchlassquerschnitt frei als in der ersten Endlage VE₁. Speziell kann die Systemauslegung so getroffen sein, dass die Ventilkörpereinheit 1 in ihrer ersten Endlage VE₁ die Fluidführung 14 vollständig absperrt und ihrer zweiten Endlage VE₂ maximal öffnet, wie dies für ein Selbstschlussventil passend ist, oder umgekehrt in ihrer ersten Endlage VE₁ die Fluidführung 14 maximal öffnet und ihrer zweiten Endlage VE₂ vollständig schließt, wie dies für ein selbstöffnendes Ventil passend ist.

Die Hydraulikdämpfereinheit 6 umfasst einen beweglich angeordneten Hydraulikzylinder 7 mit einem Kolbenraum 8 sowie einen mit dem Betätigungsglied 3 gekoppelten Verdrängerkolben 9, der im Kolbenraum 8 beweglich zwischen einer in Fig. 1 gezeigten stationären Kolbenendlage K_{S} und einer in Fig. 2 gezeigten instationären Kolbenendlage K_{I} angeordnet ist und den Kolbenraum 8 in zwei Halbräume 8a, 8b unterteilt. Des Weiteren besitzt die Hydraulikdämpfereinheit 6 eine Hydraulikfluid-Durchlassverbindung 10 zwischen den beiden Halbräumen 8a, 8b, die bei Bewegung des Verdrängerkolbens 9 in Richtung seiner instationären Kolbenendlage K_{I} öffnet und bei Bewegung des Verdrängerkolbens 9 in Richtung seiner stationären Kolbenendlage K_{S} schließt. Außerdem weist die Hydraulikdämpfereinheit eine Hydraulikfluid-Drosselverbindung 11 zwischen den beiden Halbräumen 8a, 8b auf, die mindestens bei Bewegung des Verdrängerkolbens 9 in Richtung seiner stationären Kolbenendlage K_{S} offen ist.

In entsprechenden Ausführungsformen des Fluidsteuerventils ist die Ventilkörpereinheit 1 in ihre zweite Endlage VE₂ selbstrückstellend ausgebildet, wozu dann entsprechende Selbstrückstellmittel 30 vorgesehen sind, und das Betätigungsglied 3 ist mit der Ventilkörpereinheit 1 unidirektional in Richtung zu deren erster Endlage VE₁ hin bewegungsgekoppelt. Hierfür sind beliebige, dem Fachmann unter Kenntnis dieser Funktionsanforderungen geläufige Mittel verwendbar. Beispielsweise kann die Ventilkörpereinheit 1 hierfür einen beweglichen Ventilkörper aufweisen, der mittels eines elastischen Vorspannelements und/oder durch Fluiddruck des in der Fluidführung geführten Fluids in seine entsprechende Endlage vorgespannt ist. Das Betätigungsglied 3 kann beispielsweise ein mit dem Verdrängerkolben 9 bewegungsstarr gekoppeltes mechanisches Übertragungsglied beinhalten, das den Ventilkörper in einer Schubrichtung mitnimmt und in der entgegengesetzten Bewegungsrichtung nicht mitnimmt.

In entsprechenden Ausführungen des Fluidsteuerventils ist ein Bewegungshub H_{V} für die Bewegung des Hydraulikzylinders 7 verstellbar. Dadurch kann der effektive Bewegungshub des Verdrängerkolbens 9 zwischen seiner stationären Kolbenendlage K_{S} und seiner instationären Kolbenendlage K_{I} im Kolbenraum 8 des Hydraulikzylinders 7 variabel eingestellt werden. Dies ermöglicht auf Wunsch eine variable Veränderung der Zeitverzögerungsdauer der selbstrückstellenden Schaltfunktion des Fluidsteuerventils.

Optional ist im Kolbenraum 8 ein kompressibles Volumenausgleichselement 12 angeordnet. Dies kann z.B. ein Schwammkörper oder ein gasgefüllter Ballonkörper sein. Das Volumenausgleichselement kann Veränderungen des freien Volumens, das für ein in der Hydraulikdämpfereinheit 6 benutztes Hydraulikfluid im Kolbenraum 8 zur Verfügung steht, ausgleichen, die sich ergeben können, wenn das Betätigungsglied 3 bei der Bewegung des Verdrängerkolbens 9 ein variables Teilvolumen des Kolbenraums 8 beansprucht. In einer entsprechenden Ausführung ist das Volumenausgleichselement 12 am Verdrängerkolben 9 angeordnet.

In entsprechenden Ausführungen des Fluidsteuerventils bilden der Hydraulikzylinder 7 und der Verdrängerkolben 9 eine translatorische Kolben/Zylinder-Einheit nach Art eines herkömmlichen Lineardämpfers, wobei der Hydraulikzylinder 7 axialbeweglich an einem Gehäusekörper 13 des Fluidsteuerventils angeordnet ist und der Verdrängerkolben 9 axialbeweglich im Hydraulikzylinder 7 angeordnet ist und das Betätigungsglied 3 translatorisch auf die Ventilkörpereinheit 1 wirkt. In alternativen Ausführungen bilden der Hydraulikzylinder 7 und der Verdrängerkolben 9 eine rotatorische Kolben/ZylinderEinheit nach Art eines herkömmlichen Rotationsdämpfers. In diesem Fall ist der Hydraulikzylinder 7 rotationsbeweglich am Gehäusekörper 13 des Fluidsteuerventils angeordnet, und der Verdrängerkolben 9 ist rotationsbeweglich im Hydraulikzylinder 7 angeordnet, wobei das Betätigungsglied 3 rotatorisch auf die Ventilkörpereinheit 1 wirkt.

In entsprechenden Ausführungen des Fluidsteuerventils besteht zwischen der Ventilkörpereinheit 1 in ihrer zweiten Endlage VE₂ und dem Betätigungsglied 3 ein Leerhub L_{H}, wenn sich der Verdrängerkolben 9 in seiner instationären Kolbenendlage K_{I} befindet. Durch den Leerhub L_{H} lässt sich die Zeitverzögerung für die selbstrückkehrende Schaltfunktion des Ventils entsprechend größer wählen als die Zeitdauer, welche die Ventilkörpereinheit 1 benötigt, um von ihrer zweiten Endlage VE₂ in ihre erste Endlage VE₁ zu gelangen. Die Ventilkörpereinheit 1 kann in diesem Fall in ihrer Bauart bzw. Bauform unabhängig von der gewünschten Zeitverzögerung der selbstrückkehrenden Schaltfunktion gewählt werden.

In entsprechenden Ausführungen weist das Fluidsteuerventil koaxial zum Hydraulikzylinder 7 eine in den Fig. 1 und 2 nicht gezeigte Anschlaghülse auf, die eine Anschlagfläche für den Hydraulikzylinder besitzt und zur Bereitstellung der Verstellbarkeit des Bewegungshubs für die Bewegung des Hydraulikzylinders 7 verstellbar am Gehäusekörper 13 des Fluidsteuerventils angebracht ist.

In entsprechenden Ausführungen des Fluidsteuerventils umfasst die Ventilkörpereinheit 1 einen in den Fig. 1 und 2 nicht gezeigten Membranventilkörper mit magnetbetätigter Pilotventilvorsteuerung, wobei ein zugehöriger Magnet von einer Magnethalterung gehalten ist, die eine Anschlagfläche für das Betätigungsglied aufweist. Die Magnethalterung kann durch eine Vorspannfeder in einer zur Wirkrichtung des Betätigungsglieds 3 auf die Magnethalterung entgegengesetzten Richtung vorgespannt sein.

Optional kann die Hydraulikfluid-Durchlassverbindung 10 einen über den Bewegungshub des Verdrängerkolbens 9 von seiner stationären Kolbenendlage K_{S} zu seiner instationären Kolbenendlage K_{I} hinweg nichtkonstanten Durchlassquerschnitt aufweisen, der in einem an die stationäre Kolbenendlage K_{S} angrenzenden Hubbereich größer ist als in einem an die instationäre Kolbenendlage K_{I} angrenzenden Hubbereich.

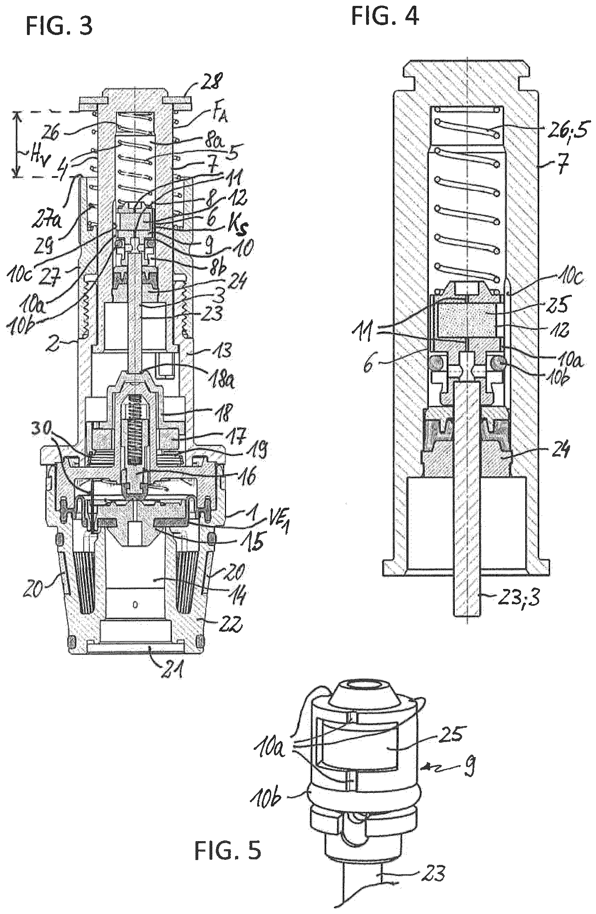

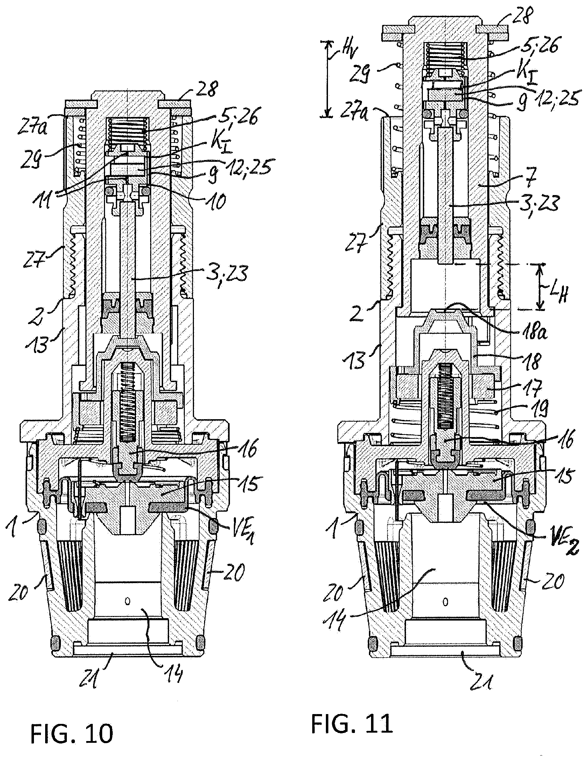

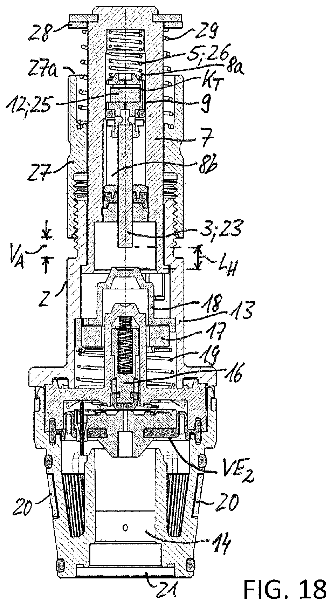

Die Fig. 3 bis 18 veranschaulichen Ausführungsformen des erfindungsgemäßen Fluidsteuerventils vom vorgesteuerten Membranventiltyp, wobei diese Ausführungsformen die oben zum Fluidsteuerventil der Fig. 1 und 2 bereits erwähnten Komponenten bzw. beispielhafte Realisierungen hiervon aufweisen, so dass insoweit auch auf dessen obige Erläuterungen verwiesen werden kann. Bei den Ausführungen der Fig. 3 bis 18 beinhaltet die Ventilkörpereinheit 1 einen Membranventilkörper 15 mit Vorsteuerung durch ein magnetbetätigtes Pilotventil 16, wobei ein zugehöriger Magnet 17 von einer Magnethalterung 18 gehalten ist, die eine Anschlagfläche 18a für das Betätigungsglied 3 aufweist. Diese Ausführungen beinhalten die Selbstrückstellmittel 30 für die Ventilkörpereinheit 1, hier in Form einer auf die Magnethalterung 18 bzw. den Magneten 17 wirkenden Vorspannfeder 19 und einer Auslegung der Ventilkörpereinheit 1 derart, dass der Fluiddruck in der Fluidführung 14 diese Selbstrückstellfunktion unterstützt. Die Ventilkörpereinheit 1 ist im Übrigen von einer an sich bekannten Bauart, was hier folglich keiner weiteren Erläuterungen bedarf. Sie greift mit ihrem Membranventilkörper 15 in die Fluidführung 14 ein, wozu die Ventilkörpereinheit 1 Gehäuseöffnungen aufweist, die je nach Fluidverschaltung des Ventils als Zulauf bzw. Auslauf fungieren, z.B. eine umfangseitige Zulauföffnung 20 und eine axiale Auslauföffnung 21 in einem hohlzylindrischen Gehäuseteil 22 der Ventilkörpereinheit 1. In diesem gezeigten Beispiel ist das Fluidsteuerventil als Selbstschlussventil konfiguriert, so dass die Ventilkörpereinheit 1 die Fluidführung 14 in der in Fig. 3 gezeigten, selbsthaltenden Ausgangsstellung F_{A} des Fluidsteuerventils absperrt, während sie die Fluidführung 14 in der temporären Schaltstellung F_{T} des Fluidsteuerventils gemäß den Fig. 11 und 18 freigibt, d.h. öffnet.

Bei den Ausführungen der Fig. 3 bis 18 ist die Hydraulikdämpfereinheit 6 als Lineardämpfer mit axialbeweglich im Kolbenraum 8 des Hydraulikzylinders 7 angeordnetem Verdrängerkolben 9 realisiert, wobei der Hydraulikzylinder 7 seinerseits axialbeweglich am Gehäusekörper 13 des Fluidsteuerventils angeordnet ist. Das Betätigungsglied 3 ist als bewegungsstarr am Verdrängerkolben 9 angeordnete Kolbenstange 23 realisiert. Die Kolbenstange 23 ist an einer Stirnseite des zylindrischen Verdrängerkolbens 9 angeordnet und erstreckt sich von dort aus durch den einen der beiden Kolbenhalbräume 8a, 8b, der hier als vorderer Halbraum 8b bezeichnet sei, und durch eine Abdichtung 24 hindurch aus dem Halbraum 8b und damit aus dem Hydraulikzylinder 7 heraus axial in Richtung Ventilkörpereinheit 1. In der Ausgangsstellung F_{A} des Fluidsteuerventils liegt die Kolbenstange 23 mit ihrem vom Verdrängerkolben 9 abgewandten Stirnende gegen die Anschlagfläche 18a der Magnethalterung 18 an.

Das Volumenausgleichselement 12 ist in den Ausführungen der Fig. 3 bis 18 von einem geschlossenporigen Schwammkörper 25 gebildet, der in einer korrespondierenden Aussparung am Verdrängerkolben 9 aufgenommen ist. Die Rückstellfederanordnung 5 umfasst eine Schraubenfeder 26, die im hinteren Kolbenhalbraum 8a angeordnet ist und sich einerseits gegen eine hintere Bodenfläche des Hydraulikzylinders 7 und andererseits gegen eine hintere Stirnseite des Verdrängerkolbens 9 abstützt.

In den Ausführungen der Fig. 3 bis 18 beinhaltet das Fluidsteuerventil koaxial zum Hydraulikzylinder 7 eine an den Gehäusekörper 13 anschraubbare Anschlaghülse 27, die eine Anschlagfläche 27a für den Hydraulikzylinder 7 aufweist, wobei der Hydraulikzylinder 7 mit einem korrespondierenden, radial abkragenden Anschlagringflansch 28 versehen ist. Der Hydraulikzylinder 7 ist in der Anschlaghülse 27 und dem Gehäusekörper 13 des Ventils mit dem Bewegungshub H_{V} als zugehöriger Bewegungsamplitude geführt. Mittels einer Vorspannfeder 29 ist der Hydraulikzylinder 7 in eine in Fig. 3 gezeigte Ausgangsstellung bzw. Endlage vorgespannt, in welcher der Anschlagflansch 28 seinen maximalen Abstand gemäß dem Bewegungshub H_{V} von der Hülsenanschlagfläche 27a hat. Diese Ausgangsstellung kann z.B. dadurch definiert sein, dass der Hydraulikzylinder 7 mit einem an seinem vorderen Stirnende radial abkragenden Ringanschlagflansch gegen eine Anschlagschulter an einer den Hydraulikzylinder 7 führenden Innenwandung des Gehäusekörpers 13 axial zur Anlage kommt.

In der Ausführung gemäß den Fig. 3 bis 7 beinhaltet die Hydraulikfluid-Durchlassverbindung 10 einen sich außen am Verdrängerkolben 9 vorbei oder alternativ durch diesen hindurch zwischen den beiden Kolbenhalbräumen 8a, 8b erstreckenden Durchlasskanal 10a und einen zugeordneten Abdichtring 10b nach Art einer Rückschlagventilanordnung. Der Durchlasskanal 10a kann beispielsweise eine oder mehrere entsprechende Axialnuten am Außenumfang des Verdrängerkolbens 9 beinhalten.

Weiter ist in der Ausführung der Fig. 3 bis 7 die Hydraulikfluid-Drosselbindung 11 von einem sich z.B. zentrisch durch den Verdrängerkolben 9 hindurch erstreckenden Drosselkanal 11a gebildet, der einen verglichen mit dem Durchlasskanal 10a deutlich geringeren Durchlassquerschnitt besitzt. Im Ankopplungsbereich zur Kolbenstange 23 kann der Verdrängerkolben 9 mit einem oder mehreren radialen Verbindungskanälen 11b als Zugänge zum Drosselkanal 11a versehen sein. Gegenüberliegend kann der Drosselkanal 11a z.B. wie gezeigt in den Bereich der Aufnahme des Schwammkörpers 25 münden.

Ausgehend von der Ventilausgangsstellung gemäß Fig. 3 kann der Benutzer zur Auslösung der Ventilschaltfunktion die Ventilbetätigungseinheit 2 dadurch betätigen, dass er mit einer axialen Betätigungskraft B_{K} den Hydraulikzylinder 7 um die Länge seines Hubwegs H_{V} bewegt, sei es durch direkte Betätigung des dann als Bedienschnittstelle fungierenden Hydraulikzylinders 7 oder durch Betätigen eines mit dem Hydraulikzylinder 7 gekoppelten Bedienelements. Die Bedienkraft B_{K} auf den Hydraulikzylinder 7 überwindet die elastischen Rückstell- bzw. Vorspannkräfte der Vorspannfeder 29 und der Rückstellfederanordnung 5, so dass sich der Hydraulikzylinder 7 vorbewegt, d.h. in Fig. 3 nach unten. Der Verdrängerkolben 9 bleibt hierbei relativ zum Ventilgehäusekörper 13 und zur Ventilkörpereinheit 1 ortsfest, was bedeutet, dass er sich relativ zum Hydraulikzylinder 7 nach hinten bewegt, d.h. weiter in den hinteren Halbraum 8a hinein.

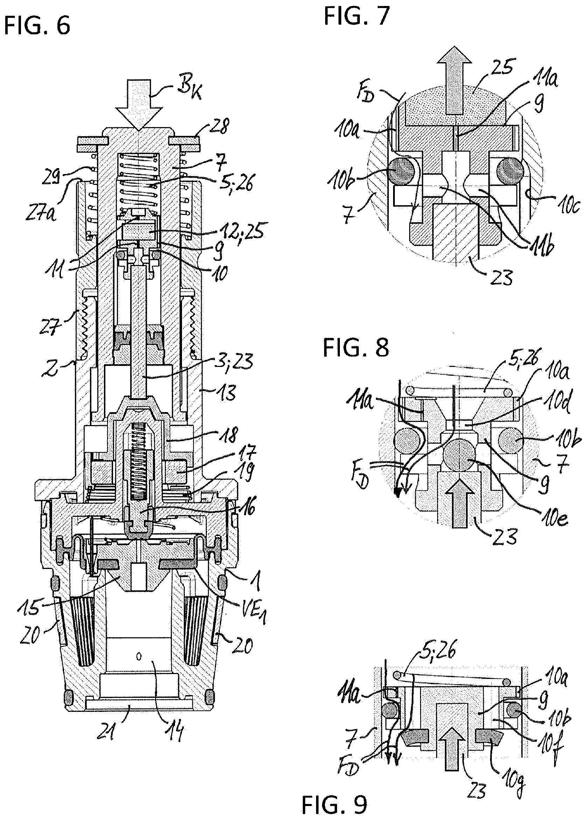

Fig. 6 zeigt das Ventil in einer Zwischenstellung dieses Ventilbewegungsabschnitts, wenn der Hydraulikzylinder 7 etwa die Hälfte seines Bewegungshubs H_{V} zurückgelegt hat. Die Vorspannfeder 29 und die Rückstellfederanordnung 5 bzw. die betreffende Schraubenfeder 26 werden gespannt. Der Abdichtring 10b gibt wegen des höheren Fluiddrucks im hinteren Halbraum 8a den Durchlasskanal 10a frei, wie insbesondere aus der Detailansicht von Fig. 7 ersichtlich, wozu der Abdichtring 10b mit entsprechender Rückschlagventil-Axialbeweglichkeit am Verdrängerkolben 9 gehalten ist. Dadurch kann Hydraulikfluid durch den Durchlasskanal 10a hindurch und am Abdichtring 10b vorbei vom hinteren Halbraum 8a in den vorderen Halbraum 8b strömen, wie in Fig. 7 durch den Strömungspfeil F_{D} veranschaulicht. Da bei dieser Bewegung des Verdrängerkolbens 9 relativ zum Hydraulikzylinder nach hinten eine größer werdende Teillänge der Kolbenstange 23 in den Kolbenraum 8 gelangt, verringert sich entsprechend das für das Hydraulikfluid zur Verfügung stehende freie Volumen des Kolbenraums 8. Dies gleicht das Volumenausgleichselement 12 aus, z.B. durch Zusammendrücken des geschlossenporigen Schwammkörpers 25.

Optional umfasst die Hydraulikfluid-Durchlassverbindung 10 zusätzlich einen Freigangkanal 10c, der als Axialkanal zwischen dem Verdrängerkolben 9 und der Innenwandung des Hydraulikzylinders 7 z.B. nur in einem vorderen Teilabschnitt des Hydraulikzylinders 7 bzw. des Bewegungshubs des Verdrängerkolbens 9 zwischen seiner stationären Kolbenendlage Ks und seiner instationären Kolbenendlage K_{I} gebildet ist. Der zusätzliche Freigangkanal 10c hat eine entsprechende Erhöhung des Durchlassquerschnitts der Hydraulikfluid-Durchlassverbindung 10 im betreffenden Teilabschnitt des Hubs des Verdrängerkolbens 9 zwischen seinen beiden Kolbenendlagen K_{S}, K_{I} zur Folge. Damit kann ein gewünschter Bewegungs-/Kräfteverlauf für die Relativbewegung von Verdrängerkolben 9 und Hydraulikzylinder 7 erzielt bzw. optimiert werden.

In einer Ausführungsvariante gemäß Fig. 8 beinhaltet die Hydraulikfluid-Durchlassverbindung 10 eine zusätzliche, z.B. zentrische Rückschlagventileinheit mit einem weiteren Durchlasskanal 10d und einer korrespondierenden Rückschlagventilkugel 10e. Durch diese weitergehende Erhöhung des Durchflussquerschnitts für die Hydraulikfluid-Durchlassverbindung 10 lässt sich die zum Durchdrücken des Hydraulikzylinders 7 und damit zum Bewegen des Verdrängerkolbens 9 von seiner stationären Kolbenendlage K_{S} in seine instationäre Kolbenendlage K_{I} benötigte Betätigungskraft um den entsprechend geringeren Strömungswiderstand des Hydraulikfluids verringern.

In einer Ausführungsvariante gemäß Fig. 9 beinhaltet die Hydraulikfluid-Durchlassverbindung 10 ebenfalls eine zweite Rückschlagventileinheit, die in diesem Fall von einem weiteren, ringförmigen Durchlasskanal 10f und einem flexiblen Rückschlagventil-Membrankörper 10g gebildet ist.

Fig. 10 zeigt das Fluidsteuerventil mit vollständig durchgedrücktem bzw. eingedrücktem Hydraulikzylinder 7 und mit in seiner instationären Kolbenendlage K_{I} befindlichem Verdrängerkolben 9. Die Ventilkörpereinheit 1 befindet sich noch in ihrer ersten Endlage VE₁. Der Benutzer beendet nun seine Betätigungseinwirkung, d.h. er lässt die Ventilbetätigungseinheit 2 los, wodurch die Betätigungskraft B_{K} auf den Hydraulikzylinder 7 entfällt. Dadurch drückt die Vorspannfeder 29 den Hydraulikzylinder 7 um seinen Bewegungshub H_{V} in seine Ausgangsstellung von Fig. 3 zurück. Der Verdrängerkolben 9 folgt dieser Bewegung aufgrund des Dämpferaufbaus der Hydraulikdämpfereinheit 6 und nimmt dabei die Kolbenstange 23, d.h. das Betätigungsglied 3, mit. Dadurch entfällt die Kraft des Betätigungsglieds 3 auf die Ventilkörpereinheit 1, hier speziell die axial nach vorn wirkende Kraft der Kolbenstange 23 auf die Magnethalterung 18. Wegen seiner nur unidirektionalen Kopplung nimmt das Betätigungsglied 3 die Ventilkörpereinheit 1 bei dieser Rückbewegung nicht mit. Stattdessen gibt das Betätigungsglied 3 die Ventilkörpereinheit 1 dazu frei, dass sich diese selbstrückstellend in ihre zweite Endlage VE₂ bewegt, indem die Vorspannfeder 19 die Magnethalterung 18 und den Magneten 17 zurückdrückt und der Membranventilkörper 15 unter der Wirkung des Pilotventils 16 und des Fluiddrucks des in der Fluidführung 14 geführten Fluids in die entsprechende Endlage bewegt wird. Das Betätigungsglied 3 in Form der Kolbenstange 23 hat sich hierbei um den Leerhub L_{H} weiter zurückbewegt als die Ventilkörpereinheit 1 bzw. deren Magnethalterung 18. Fig. 11 zeigt das Fluidsteuerventil in dieser Situation, in der es sich in seiner temporären Schaltstellung F_{T} befindet. Beispielsweise gibt die Ventilkörpereinheit 1 mit ihrem Membranventilkörper 15 in der Auslegung als Selbstschlussventil die Fluidführung 14 in der temporären Schaltstellung F_{T} des Fluidsteuerventils frei, d.h. die Fluidführung 14 ist geöffnet.

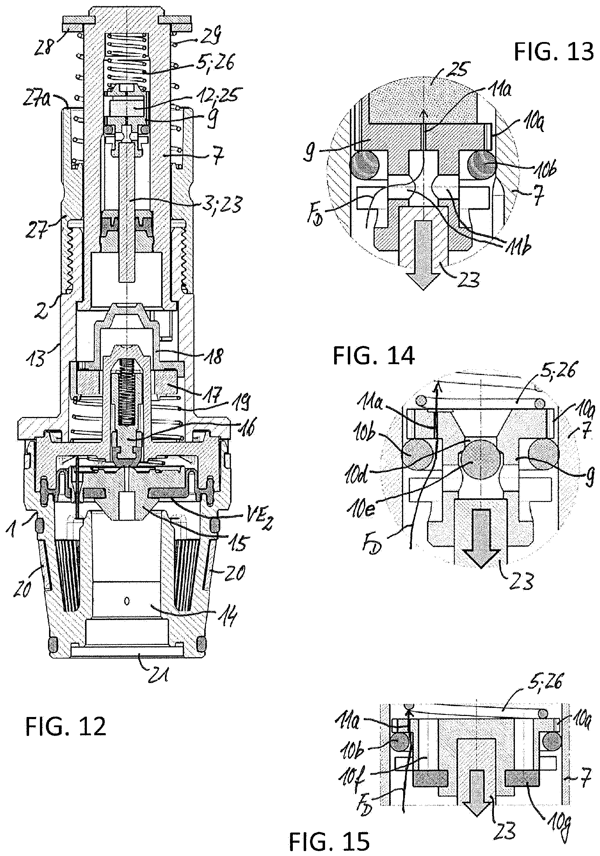

Ausgehend von dieser temporären Schaltstellung F_{T} des Fluidsteuerventils gemäß Fig. 11 beginnt sich der Verdrängerkolben 9 und mit ihm die Kolbenstange 23 unter der Wirkung der Rückstellfederanordnung 5 im Kolbenraum 8 nach vorn zu bewegen. Wegen des erforderlichen Volumenausgleichs des Hydraulikfluids zwischen den beiden Kolbenhalbräumen 8a, 8b, der nur über die einen relativ kleinen Durchlassquerschnitt aufweisende Drosselverbindung 11 möglich ist, erfolgt diese Kolbenvorschubbewegung vergleichsweise langsam. Die aus der Aufhebung der Betätigungskraft B_{K} resultierende Druckumkehr für das Hydraulikfluid in den beiden Halbräumen 8a, 8b hat zur Folge, dass der Abdichtring 10b axial gegen den Durchlasskanal 10a angedrückt wird, wodurch die Hydraulikfluid-Durchlassverbindung 10 geschlossen wird. Die Hydraulikfluidströmung F_{D} kann nur noch über die offen bleibende Drosselverbindung 11 erfolgen, speziell vom vorderen Halbraum 8b in den hinteren Halbraum 8a, wie in Fig. 13 veranschaulicht. Analog schließt in der Ausführungsvariante von Fig. 8 die Rückschlagventilkugel 10e den zusätzlichen Durchlasskanal 10d, wie in Fig. 14 veranschaulicht, und in der Ausführung gemäß Fig. 9 schließt der flexible Membrankörper 10g die zusätzliche Durchlassverbindung 10f, wie in Fig. 15 veranschaulicht. Da die Kolbenstange 23 nun wieder mit größerer Länge aus dem Kolbenraum 8 herausgelangt, nimmt das freie Kolbenraumvolumen für das Hydraulikfluid wieder zu, was erneut durch das Volumenausgleichselement 12 ausgeglichen wird, z.B. indem sich der Schwammkörper 25 wieder ausdehnt.

Fig. 12 zeigt das Fluidsteuerventil in einer Zwischenstellung dieses Bewegungsabschnitts, in der das Betätigungsglied 3 etwa die Hälfte des Leerhubs L_{H} zurückgelegt hat. Die Magnethalterung 18 samt Magnet 17 bleiben unbewegt, bis das Betätigungsglied 3 den gesamten Leerhub L_{H} zurückgelegt hat. Im gezeigten Beispiel von Fig. 12 gelangt der Verdrängerkolben 9 nach Zurücklegen etwa des halben Leerhubs L_{H} in den Bereich des Freigangkanals 10c, wodurch sich die Ausfahrbewegung des Verdrängerkolbens 9 und damit des Betätigungsglieds 3 für den restlichen Bewegungsabschnitt bis zum Erreichen der Anschlagfläche 18a der Magnethalterung 18 beschleunigt. Auch insoweit kann folglich durch den Freigangkanal 10c die Bewegungscharakteristik der Hydraulikdämpfereinheit 6 in einer gewünschten Weise eingestellt werden.

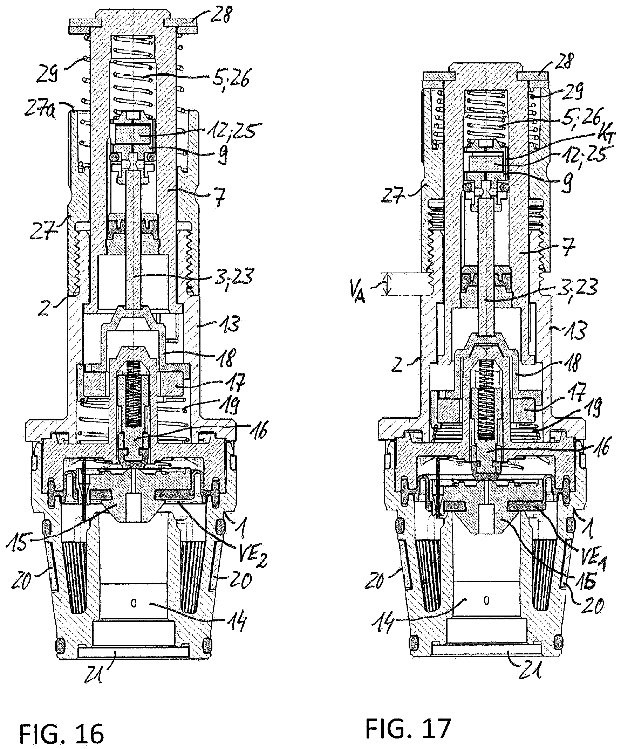

Fig. 16 zeigt das Fluidsteuerventil in der Position, wenn das Betätigungsglied 3 seinen Leerhub L_{H} zurückgelegt hat. Die Kolbenstange 23 kommt dann wieder zur Anlage gegen die Anschlagfläche 18a der Magnethalterung 18. Nun bewegt das Betätigungsglied 3 durch die weitere Vorbewegung des Verdrängerkolbens 9 aufgrund der Wirkung der Rückstellfederanordnung 5 die Magnethalterung 18 samt Magnet 17 gegen die Wirkung der Vorspannfeder 19 vor, wodurch das Pilotventil 16 und damit die Ventilkörpereinheit 1 insgesamt betätigt bzw. aktiviert werden. Sobald der Verdrängerkolben 9 seine stationäre Kolbenendlage K_{S} wieder erreicht hat, hat die Ventilbetätigungseinheit 2 die Ventilkörpereinheit 1 wieder in ihre erste Endlage VE₁ bewegt bzw. umgesteuert, wodurch das Fluidsteuerventil wieder seine Ausgangslage gemäß Fig. 3 erreicht hat und sich in seiner selbsthaltenden Ausgangsstellung F_{A} befindet.

Für die Ausführungen der Fig. 3 bis 16 kann vorteilhaft vorgesehen sein, dass der Bewegungshub H_{V} für die Bewegung des Hydraulikzylinders 7 verstellbar ist. Dies kann in einfacher Weise dadurch realisiert sein, dass die Anschlaghülse 27 nicht wie im Beispiel der Fig. 3 bis 16 vollständig auf den Ventilgehäusekörper 13 ausgeschraubt wird, sondern nur so weit, dass ein gewünschter axialer Verstellabstand V_{A} verbleibt. Der Bewegungshub H_{V} für den Hydraulikzylinder 7 ist dementsprechend um den Verstellabstand V_{A} kleiner, und in Folge davon ist auch der Leerhub L_{H} um diesen Verstellabstand V_{A} kleiner. Entsprechend ist der Hub des Verdrängerkolbens 9 zwischen seinen beiden Endlagen K_{S}, K_{I} verkürzt, da er um dieses Maß weniger weit nach hinten in den Hydraulikzylinder 7 gelangt, wenn dieser vorgedrückt wird, d.h. die instationäre Kolbenendlage K_{I} ist um das Maß des Verstellabstandes V_{A} nach vorn verschoben. Insgesamt verkürzt sich dadurch die Betätigungsbewegung des Betätigungsglieds 3 um den Verstellabstand V_{A}, wodurch die Zeitverzögerung, mit der das Ventil von seiner temporären Schaltstellung F_{T} in seine selbsthaltende Ausgangsstellung F_{A} gelangt, entsprechend verkürzt wird. Somit lässt sich mittels der am Ventilgehäusekörper 13 verstellbar anbringbaren Anschlaghülse 27 in konstruktiv einfacher Weise die Zeitverzögerung für die selbstrückstellende Schaltfunktion des Fluidsteuerventils stufenlos verstellen.

Fig. 17 veranschaulicht das Fluidsteuerventil in seiner Stellung mit vollständig eingedrücktem Hydraulikzylinder 7 entsprechend Fig. 10, wenn der besagte Verstellabstand V_{A} eingestellt ist. Fig. 18 zeigt das Fluidsteuerventil mit dem Verstellabstand V_{A} in seiner temporären Schaltstellung F_{T} entsprechend Fig. 11.

Wie die gezeigten und oben erläuterten sowie die weiteren oben beschriebenen Ausführungsbeispiele deutlich machen, stellt die Erfindung in einer konstruktiv und funktionell vorteilhaften Weise ein Fluidsteuerventil mit zeitverzögert selbstrückstellender Schaltfunktion zur Verfügung, das sich z.B. als Selbstschlussventil oder als selbstöffnendes Ventil in der Sanitärtechnik eignet, aber auch in anderen technischen Anwendungen, bei denen Bedarf an einem solchen Fluidsteuerventil besteht.

## Patentansprüche

1. Fluidsteuerventil mit zeitverzögert selbstrückstellender Schaltfunktion, insbesondere zeitverzögertes sanitäres Selbstschlussventil, mit
- einer Ventilkörpereinheit (1), die zwischen einer ersten Endlage (VE₁), die einer selbsthaltenden Ausgangsstellung (F_{A}) des Fluidsteuerventils entspricht, und einer zweiten Endlage (VE₂) beweglich ist, die einer temporären Schaltstellung (F_{T}) des Fluidsteuerventils entspricht, aus der das Fluidsteuerventil zeitverzögert selbsttätig in die Ausgangsstellung zurückkehrt,
- einer Ventilbetätigungseinheit (2), die dafür eingerichtet ist, die Ventilkörpereinheit nutzerinitiiert von der ersten Endlage in die zweite Endlage und zeitverzögert selbsttätig von der zweiten Endlage in die erste Endlage zu bewegen, und die ein auf die Ventilkörpereinheit wirkendes Betätigungsglied (3) und eine Selbstrückstelleinheit (4) mit einer Rückstellfederanordnung (5) und einer Hydraulikdämpfereinheit (6) aufweist, **dadurch gekennzeichnet**t, dass
- die Hydraulikdämpfereinheit einen beweglich angeordneten Hydraulikzylinder (7) mit einem Kolbenraum (8), einen im Kolbenraum beweglich zwischen einer stationären Kolbenendlage (K_{S}) und einer instationären Kolbenendlage (K_{I}) angeordneten Verdrängerkolben (9), mit dem das Betätigungsglied gekoppelt ist und der den Kolbenraum in zwei Halbräume (8a, 8b) unterteilt, eine bei Bewegung des Verdrängerkolbens in Richtung seiner instationären Kolbenendlage öffnende und bei Bewegung des Verdrängerkolbens in Richtung seiner stationären Kolbenendlage schließende Hydraulikfluid-Durchlassverbindung (10) zwischen den beiden Halbräumen und eine mindestens bei Bewegung des Verdrängerkolbens in Richtung seiner stationären Kolbenendlage offene Hydraulikfluid-Drosselverbindung (11) zwischen den beiden Halbräumen umfasst, wobei
- die Ventilkörpereinheit (1) in ihre zweite Endlage (VE₂) selbstrückstellend ausgebildet ist und das Betätigungsglied (3) mit der Ventilkörpereinheit unidirektional in Richtung zu deren erster Endlage (VE₁) hin bewegungsgekoppelt ist und/oder
ein Bewegungshub (H_{V}) für die Bewegung des Hydraulikzylinders (7) verstellbar ist, wobei koaxial zum Hydraulikzylinder eine Anschlaghülse (27) vorgesehen ist, die eine Anschlagfläche (27a) für den Hydraulikzylinder aufweist und zur Bereitstellung des verstellbaren Bewegungshubs für die Bewegung des Hydraulikzylinders verstellbar an einem Gehäusekörper (13) des Fluidsteuerventils angebracht ist.

2. Fluidsteuerventil nach Anspruch 1, weiter **dadurch gekennzeichnet, dass**
- der Hydraulikzylinder und der Verdrängerkolben eine translatorische Kolben/Zylinder-Einheit bilden, wobei der Hydraulikzylinder axialbeweglich an einem Gehäusekörper (13) des Fluidsteuerventils angeordnet ist und der Verdrängerkolben axialbeweglich im Hydraulikzylinder angeordnet ist und das Betätigungsglied translatorisch auf die Ventilkörpereinheit wirkt, oder
- der Hydraulikzylinder und der Verdrängerkolben eine rotatorische Kolben/Zylinder-Einheit bilden, wobei der Hydraulikzylinder rotationsbeweglich an einem Gehäusekörper (13) des Fluidsteuerventils angeordnet ist und der Verdrängerkolben rotationsbeweglich im Hydraulikzylinder angeordnet ist und das Betätigungsglied rotatorisch auf die Ventilkörpereinheit wirkt.

3. Fluidsteuerventil nach Anspruch 1 oder 2, weiter **dadurch gekennzeichnet, dass** zwischen der Ventilkörpereinheit in ihrer zweiten Endlage und dem Betätigungsglied bei in seiner instationären Kolbenendlage befindlichem Verdrängerkolben ein Leerhub (L_{H}) besteht.

4. Fluidsteuerventil nach einem der Ansprüche 1 bis 3, weiter **dadurch gekennzeichnet, dass** die Ventilkörpereinheit einen Membranventilkörper (15) mit magnetbetätigter Pilotventilvorsteuerung umfasst, wobei ein zugehöriger Magnet (17) von einer Magnethalterung (18) gehalten ist, die eine Anschlagfläche (18a) für das Betätigungsglied aufweist.

5. Fluidsteuerventil nach Anspruch 4, weiter **dadurch gekennzeichnet, dass** die Magnethalterung durch eine Vorspannfeder (19) in einer zur Wirkrichtung des Betätigungsglieds auf die Magnethalterung entgegengesetzten Richtung vorgespannt ist.

6. Fluidsteuerventil nach einem der Ansprüche 1 bis 5, weiter **dadurch gekennzeichnet, dass** die Hydraulikfluid-Durchlassverbindung einen über den Hub des Verdrängerkolbens von seiner stationären zu seiner instationären Kolbenendlage hinweg nichtkonstanten Durchlassquerschnitt aufweist, wobei der Durchlassquerschnitt in einem an die stationäre Kolbenendlage angrenzenden Hubbereich größer ist als in einem an die instationäre Kolbenendlage angrenzenden Hubbereich.

7. Fluidsteuerventil nach einem der Ansprüche 1 bis 6, weiter **dadurch gekennzeichnet, dass** in mindestens einem der Halbräume (8a, 8b) ein kompressibles Volumenausgleichselement (12) angeordnet ist.

8. Fluidsteuerventil nach Anspruch 7, weiter **dadurch gekennzeichnet, dass** das Volumenausgleichselement von einem geschlossenporigen Schwammkörper (25) gebildet ist, der am Verdrängerkolben angeordnet ist.

## Claims

1. Fluid control valve having a time-delayed self-resetting switching function, preferably a time-delayed sanitary self-closing valve, comprising
- a valve body unit (1) which is movable between a first end position (VE₁), corresponding to a self-holding initial condition (F_{A}) of the fluid control valve, and a second end position (VE₂), corresponding to a temporary switched condition (F_{T}) of the fluid control valve, where the fluid control valve returns from the temporary switched condition to the initial condition in a time-delayed self-acting manner,
- a valve actuating unit (2) configured to move the valve body unit, initiated by a user, from the first end position to the second end position and, time-delayed in a self-acting manner, from the second end position to the first end position, and which valve actuating unit includes an actuating member (3) acting on the valve body unit and a self-resetting unit (4) having a return spring arrangement (5) and a hydraulic damper unit (6),
**characterized in that**
- the hydraulic damper unit comprises a movably mounted hydraulic cylinder (7) with a piston chamber (8), a displacing piston (9) disposed within the piston chamber to be movable between a stationary piston end position (K_{S}) and a transient piston end position (K_{I}), to which displacing piston the actuating member is coupled and which displacing piston subdivides the piston chamber into two half chambers (8a, 8b), a hydraulic fluid passage connection (10) between the two half chambers which opens upon movement of the displacing piston in the direction towards its transient piston end position and closes upon movement of the displacing piston in the direction towards its stationary piston end position, and a hydraulic fluid throttle connection (11) between the two half chambers that is open at least upon movement of the displacing piston in the direction towards its stationary piston end position, wherein
- the valve body unit (1) is configured to be self-resetting to its second end position (VE₂), and the actuating member (3) is coupled for movement to the valve body unit unidirectionally in the direction towards the first end position (VE₁) thereof, and/or
- a movement stroke (H_{V}) for the movement of the hydraulic cylinder (7) is adjustable, wherein a stop sleeve (27) is provided coaxially to the hydraulic cylinder, which sleeve includes a stop surface (27a) for the hydraulic cylinder and is attached on a housing body (13) of the fluid control valve to be adjustable for providing the adjustable movement stroke for the movement of the hydraulic cylinder.

2. Fluid control valve according to claim 1, further **characterized in that**
- the hydraulic cylinder and the displacing piston provide a translatory piston/cylinder unit, wherein the hydraulic cylinder is disposed on a housing body (13) of the fluid control valve for axial movement and the displacing piston is disposed within the hydraulic cylinder for axial movement and the actuating member acts on the valve body unit in a translatory manner, or
- the hydraulic cylinder and the displacing piston provide a rotatory piston/cylinder unit, wherein the hydraulic cylinder is disposed on a housing body (13) of the fluid control valve for rotational movement and the displacing piston is disposed within the hydraulic cylinder for rotational movement and the actuating member acts on the valve body unit in a rotatory manner.

3. Fluid control valve according to claim 1 or 2, further **characterized in that** an idle stroke (L_{H}) is established between the valve body unit in its second end position and the actuating member with the displacing piston located in its transient piston end position.

4. Fluid control valve according to any one of claims 1 to 3, further **characterized in that** the valve body unit comprises a diaphragm valve body (15) with solenoid-operated pilot valve control, wherein an associated magnet (17) is held by a magnet holder (18) which includes a stop surface (18a) for the actuating member.

5. Fluid control valve according to claim 4, further **characterized in that** the magnet holder is biased by a bias spring (19) in a direction opposite to the operating direction of the actuating member on the magnet holder.

6. Fluid control valve according to any one of claims 1 to 5, further **characterized in that** the hydraulic fluid passage connection has a non-constant passage cross-section across the stroke of the displacing piston from its stationary to its transient piston end position, wherein the passage cross-section in a stroke region adjacent to the stationary piston end position is greater than in a stroke region adjacent to the transient piston end position.

7. Fluid control valve according to any one of claims 1 to 6, further **characterized in that** in at least one of the half chambers (8a, 8b) a compressible volume compensating element (12) is disposed.

8. Fluid control valve according to claim 7, further **characterized in that** the volume compensating element is a closed-porous sponge body (25) which is disposed on the displacing piston.

## Revendications

1. Vanne de commande de fluide ayant une fonction de commutation à rappel automatique retardé dans le temps, en particulier vanne sanitaire à fermeture automatique retardée dans le temps, comportant
- une unité de corps de vanne (1) qui est mobile entre une première position de fin de course (VE₁) qui correspond à une position initiale (F_{A}) d'automaintien de la vanne de commande de fluide, et une deuxième position de fin de course (VE₂) qui correspond à une position de commutation temporaire (F_{T}) de la vanne de commande de fluide, à partir de laquelle la vanne de commande de fluide revient automatiquement à la position initiale avec un retard dans temps,
- une unité d'actionnement de vanne (2) qui est conçue pour déplacer l'unité de corps de vanne de la première position de fin de course jusqu'à la deuxième position de fin de course en étant initiée par l'utilisateur et pour la déplacer, après un retard dans le temps, automatiquement de la deuxième position de fin de course jusqu'à la première position de fin de course, et qui comporte un organe d'actionnement (3) agissant sur l'unité de corps de vanne, et une unité de rappel automatique (4) présentant un ensemble de ressort de rappel (5) et une unité d'amortissement hydraulique (6), **caractérisée en ce que**
- l'unité d'amortissement hydraulique comprend un cylindre hydraulique (7) disposé de manière mobile et pourvu d'une chambre de piston (8), un piston de refoulement (9) disposé dans la chambre de piston de manière mobile entre une position stationnaire de fin de course de piston (Ks) et une position non stationnaire de fin de course de piston (K_{I}), piston auquel est couplé l'organe d'actionnement et qui subdivise la chambre de piston en deux demi-chambres (8a, 8b), une liaison de passage de fluide hydraulique (10) entre les deux demi-chambres qui s'ouvre lorsque le piston de refoulement se déplace dans la direction de sa position non stationnaire de fin de course et qui se ferme lorsque le piston de refoulement se déplace dans la direction de sa position stationnaire de fin de course, et une liaison d'étranglement de fluide hydraulique (11) entre les deux demi-chambres, qui est ouverte au moins lorsque le piston de refoulement se déplace dans la direction de sa position stationnaire de fin de course,
dans laquelle
- l'unité de corps de vanne (1) est réalisée avec rappel automatique jusque dans sa deuxième position de fin de course (VE₂), et l'organe d'actionnement (3) est couplé en mouvement à l'unité de corps de vanne de manière unidirectionnelle dans la direction de sa première position de fin de course (VE₁) et/ou
- une course de mouvement (Hv) pour le mouvement du cylindre hydraulique (7) est réglable, une douille de butée (27) étant prévue coaxialement par rapport au cylindre hydraulique et présentant une surface de butée (27a) pour le cylindre hydraulique et étant montée de manière réglable sur un corps de boîtier (13) de la vanne de commande de fluide afin d'assurer la course de mouvement réglable pour le mouvement du cylindre hydraulique.

2. Vanne de commande de fluide selon la revendication 1,
**caractérisée en outre en ce que**
- le cylindre hydraulique et le piston de refoulement forment une unité à piston et cylindre mobile en translation, le cylindre hydraulique étant disposé de manière axialement mobile sur un corps de boîtier (13) de la vanne de commande de fluide, et le piston de refoulement étant disposé de manière axialement mobile dans le cylindre hydraulique et l'organe d'actionnement agissant en translation sur l'unité de corps de vanne, ou
- le cylindre hydraulique et le piston de refoulement forment une unité à piston et cylindre mobile en rotation, le cylindre hydraulique étant disposé de manière mobile en rotation sur un corps de boîtier (13) de la vanne de commande de fluide, et le piston de refoulement étant disposé de manière mobile en rotation dans le cylindre hydraulique et l'organe d'actionnement agissant en rotation sur l'unité de corps de vanne.

3. Vanne de commande de fluide selon la revendication 1 ou 2,
**caractérisée en outre en ce que**
une course à vide (L_{H}) existe entre l'unité de corps de vanne dans sa deuxième position de fin de course et l'organe d'actionnement, lorsque le piston de refoulement est dans sa position non stationnaire de fin de course.

4. Vanne de commande de fluide selon l'une des revendications 1 à 3,
**caractérisée en outre en ce que**
l'unité de corps de vanne comprend un corps de vanne à membrane (15) ayant un pilotage de vanne pilote à actionnement magnétique, un aimant associé (17) étant maintenu par un support d'aimant (18) qui présente une surface de butée (18a) pour l'organe d'actionnement.

5. Vanne de commande de fluide selon la revendication 4,
**caractérisée en outre en ce que**
le support d'aimant est précontraint par un ressort de précontrainte (19) dans une direction opposée à la direction d'action de l'organe d'actionnement sur le support d'aimant.

6. Vanne de commande de fluide selon l'une des revendications 1 à 5,
**caractérisée en outre en ce que**
la liaison de passage de fluide hydraulique présente une section transversale de passage qui n'est pas constante sur la course du piston de refoulement depuis sa position stationnaire de fin de course jusqu'à sa position non stationnaire de fin de course, la section transversale de passage étant plus grande dans une plage de course adjacente à la position stationnaire de fin de course que dans une plage de course adjacente à la position non stationnaire de fin de course.

7. Vanne de commande de fluide selon l'une des revendications 1 à 6,
**caractérisée en outre en ce que**
un élément de compensation de volume compressible (12) est disposé dans l'une au moins des demi-chambres (8a, 8b).

8. Vanne de commande de fluide selon la revendication 7,
**caractérisée en outre en ce que**
l'élément de compensation de volume est formé par un corps en éponge à pores fermés (25) qui est disposé sur le piston de refoulement.
